(19) Europäisches Patentamt
European Patent Office
Office européen des brevets

(11) **EP 4 442 734 A1**

(12) **EUROPEAN PATENT APPLICATION**
published in accordance with Art. 153(4) EPC

(43) Date of publication:
**09.10.2024 Bulletin 2024/41**

(21) Application number: **22900912.1**

(22) Date of filing: **11.10.2022**

(51) International Patent Classification (IPC):
**C08J 3/12** (2006.01)   **C08L 101/08** (2006.01)
**B01J 20/26** (2006.01)

(52) Cooperative Patent Classification (CPC):
**B01J 20/26; C08J 3/12; C08L 101/08**

(86) International application number:
**PCT/JP2022/037927**

(87) International publication number:
**WO 2023/100478 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 JP 2021193911**

(71) Applicant: **Sumitomo Seika Chemicals Co., Ltd.**
**Kako-gun, Hyogo 675-0145 (JP)**

(72) Inventors:
• **YAMAMOTO Tomoka**
  **Himeji-shi, Hyogo 672-8076 (JP)**
• **SAWAKI Hiroki**
  **Himeji-shi, Hyogo 672-8076 (JP)**

(74) Representative: **Vossius & Partner**
**Patentanwälte Rechtsanwälte mbB**
**Siebertstrasse 3**
**81675 München (DE)**

(54) **METHOD FOR PRODUCING COATED RESIN PARTICLE, AND COATED RESIN PARTICLE**

(57)    An aspect of the present invention relates to a method for producing coated resin particles, the method including a step of bringing water-absorbent resin particles into contact with a coating material to form a coating layer on at least a part of a surface of the water-absorbent resin particles, in which the coating material is an emulsion containing polymer particles, and an average particle diameter of the polymer particles is 120 nm or less.

**Fig.1**

EP 4 442 734 A1

## Description

### Technical Field

The present invention relates to a method for producing coated resin particles and coated resin particles.

### Background Art

In recent years, water-absorbent resin particles have been widely used in various fields such as disposable diapers and sanitary products, sanitary materials in, for example, a portable toilet, agricultural and horticultural materials such as water retention agents and soil conditioners, and industrial materials such as water sealants and anti-condensation agents. Among these fields, in particular, use in disposable diapers and sanitary products, sanitary materials in, for example, a portable toilet is common. Regarding an absorbent material containing water-absorbent resin particles, for example, Patent Literature 1 discloses that an absorbent material containing water-absorbent resin powder includes a layer, at least a part of the layer having a diffusible region where a material for improving diffusibility with a liquid permeation speed under load of 15 seconds or less is disposed.

### Citation List

### Patent Literature

[Patent Literature 1] Japanese Unexamined Patent Publication No. 2014-46020

### Summary of Invention

### Technical Problem

As for the large initial water absorption amount (lock-up height at a two-minute value), the gel blocking phenomenon is likely to occur, and the liquid thus cannot be diffused over a wide range. The present inventors have found that, it is possible to reduce the initial water absorption amount of the coated resin particles each of which is obtained by covering a surface of water-absorbent resin particles with a predetermined coating layer. The coated resin particles can be obtained by, for example, a reaction of a polyol and a polyisocyanate on the surface of the water-absorbent resin particles to form a polyurethane. However, such coated resin particles formed in this manner (conventional coated resin particles) were likely to have the lower water retention capacity than that of the water-absorbent resin particles before being covered when the coated resin particles are allowed to absorb physiological saline for 30 minutes. The reason why the water retention capacity is likely to decrease is presumed that the swelling of the water-absorbent resin particles (in the present specification, which refers to reaching a saturation point at which particles cannot absorb water any more) is prevented by the coating layer. More specifically, it is presumed that the coating layer of the conventional coated resin particles partially falls off because of the expansion of the water-absorbent resin particles by the water absorption of the water-absorbent resin particles. Meanwhile, it is considered that a part of the coating layer does not fallen off upon the expansion of the water-absorbent resin particles and remains attached to the surface of the water-absorbent resin particles. It is presumed that the residual coating layer functions as a binding band with respect to the water-absorbent resin particles, thereby preventing the water-absorbent resin particles from reaching the swollen state. In a case where the coating layer has too high impermeability to water, the liquid hardly reaches the water-absorbent resin particles inside the coated resin particles even though the coated resin particles are immersed in the liquid for 30 minutes, and the water retention capacity tends to decrease.

An object of the present invention is to provide coated resin particles having a small initial water absorption amount and a large water retention capacity, and a method for producing the coated resin particles.

### Solution to Problem

In order to weaken the binding force of the coating layer remaining on the surface of the water-absorbent resin particles, the present inventors have focused on weakening the strength of the coating layer to easily fall off from the surface of the water-absorbent resin particles, and have found that a coating material, which is a material of the coating layer, is used in an emulsified state (a state in which the particulate coating material is dispersed in a dispersion medium).

Specifically, it is considered that the strength of the coating layer is weakened because although the coated resin particles are covered with the coating material made in the emulsified state to form an aggregate (coating layer) composed of a countless number of small particles, the binding force between the particles in the aggregate is extremely weak. It is considered that the liquid can permeate into the water-absorbent resin particles even though the coating material having high impermeability to water is used, because fine pores (gaps between particles) are present in the aggregate from the surface of the coating layer to the surface of the water-absorbent resin particles. Therefore, it is considered that the coated resin particles having a small initial water absorption amount and a large water retention capacity are obtained by the formation of the coated resin particles with the coating material made in the emulsified state. The present inventors have conducted intensive studies based on such a presumption, and as a result, have found a particle diameter of the emulsion capable of achieving a coating layer having a small initial water absorption amount and a large water retention capacity.

An aspect of the present invention relates to a method for producing coated resin particles, the method including a step of bringing water-absorbent resin particles into contact with a coating material to form a coating layer on at least a part of a surface of the water-absorbent resin particles, in which the coating material is an emulsion containing polymer particles, and an average particle diameter of the polymer particles is 120 nm or less.

Another aspect of the present invention relates to coated resin particles including water-absorbent resin particles, and a coating layer that covers at least a part of a surface of the water-absorbent resin particles, at least a part of the coating layer being an aggregate composed of polymer particles having an average particle diameter of 120 nm or less.

**Advantageous Effects of Invention**

According to the present invention, it is possible to provide the coated resin particles having a small initial water absorption amount and a large water retention capacity, and the method for producing the coated resin particles.

**Brief Description of Drawings**

Fig. 1 is a schematic cross-sectional view showing an embodiment of a coated resin particle.
Fig. 2 is a schematic cross-sectional view showing an embodiment of an absorbent article.

**Description of Embodiments**

Hereinafter, some embodiments of the present invention will be described in detail. However, the present invention is not limited to the following embodiments.

In the present specification, "acrylic" and "methacrylic" are collectively referred to as "(meth)acrylic". "Acrylate" and "methacrylate" are also referred to as "(meth)acrylate". In a numerical value range described in a stepwise manner in the present specification, an upper limit value or a lower limit value of a numerical value range in a certain step can be optionally combined with an upper limit value or a lower limit value of a numerical value range in another step. In a numerical value range described in the present specification, the upper limit value or the lower limit value of the numerical value range may be replaced with the value shown in the examples. For materials exemplified in the present specification, one kind may be used alone, or two or more kinds may be used in combination. In a case where there are a plurality of substances corresponding to each of components in a composition, a content of each of the components in the composition means the total amount of the plurality of substances present in the composition unless otherwise specified. In the present specification, "physiological saline" is a sodium chloride aqueous solution having a concentration of 0.9% by mass, and the concentration of 0.9% by mass is based on the mass of the physiological saline.

[Method For Producing Coated Resin Particles]

A method for producing coated resin particles according to the present embodiment includes a step of bringing water-absorbent resin particles into contact with a coating material to form a coating layer on at least a part of a surface of the water-absorbent resin particles.

The coated resin particle in the present specification is a resin particle including a water-absorbent resin particle and a coating layer that covers at least a part of the surface of the water-absorbent resin particle.

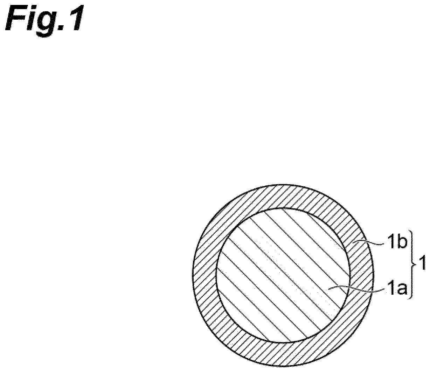

Fig. 1 is a schematic cross-sectional view showing an embodiment of the coated resin particle. As shown in Fig. 1(a), a coated resin particle 1 includes a water-absorbent resin particle 1a and a coating layer 1b with which at least a part of a surface of the water-absorbent resin particle 1a is covered. In Fig. 1(a), the entire surface of the water-absorbent resin particle 1 is covered with the coating layer 1b.

<Water-absorbent Resin Particles>

The water-absorbent resin particles may contain a polymer particle. The polymer particle may be a crosslinked polymer formed by polymerization of monomers including an ethylenically unsaturated monomer. The polymer particle can have a monomer unit derived from the ethylenically unsaturated monomer. The polymer particle can be produced by a method including a step of polymerizing monomers including ethylenically unsaturated monomers, for example. Examples of methods of polymerization include a reverse phase suspension polymerization method, an aqueous solution polymerization method, a bulk polymerization method, and a precipitation polymerization method.

The ethylenically unsaturated monomer may be a water-soluble ethylenically unsaturated monomer. The solubility of the water-soluble ethylenically unsaturated monomer in 100 g of water may be 1.0 g or more at 25°C. Examples of the water-soluble ethylenically unsaturated monomer include (meth)acrylic acid and a salt thereof, 2-(meth)acrylamide-2-methylpropanesulfonic acid and a salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide. In a case where the ethylenically unsaturated monomer has an amino group, the amino group may be quaternized. The ethylenically unsaturated monomer may be used alone, or two or more kinds thereof may be used in combination.

In a case where the ethylenically unsaturated monomer has an acid group, the ethylenically unsaturated monomer may be used in the polymerization reaction after neutralizing the acid group with an alkaline neutralizing agent. The neutralization degree of the ethylenically unsaturated monomer by the alkaline neutralizing agent may be 10% to 100% by mol, 50% to 90% by mol, or 60% to 80% by mol of the acid group in the ethylenically unsaturated monomer, for example.

From the viewpoint of industrial availability, the ethylenically unsaturated monomer may include at least one compound selected from the group consisting of (meth)acrylic acid and a salt thereof, acrylamide, methacrylamide, and N,N-dimethyl acrylamide. The ethylenically unsaturated monomer may include at least one compound selected from the group consisting of (meth)acrylic acid and a salt thereof, and acrylamide.

As a monomer for obtaining the water-absorbent resin particles, a monomer other than the above-mentioned ethylenically unsaturated monomer may be used. Such a monomer can be mixed and used with an aqueous solution containing the above-mentioned ethylenically unsaturated monomer, for example. The use amount of the ethylenically unsaturated monomer may be 60% to 100% by mol, 70% to 100% by mol, 80% to 100% by mol, 90% to 100% by mol, or 95% to 100% by mol with respect to the total amount of monomers. The ratio of the (meth)acrylic acid and a salt thereof may be 60% to 100% by mol, 70% to 100% by mol, 80% to 100% by mol, 90% to 100% by mol, or 95% to 100% by mol with respect to the total amount of monomers.

Crosslinking by self-crosslinking occurs during polymerization, but the crosslinking may be induced by using an internal crosslinking agent. When the internal crosslinking agent is used, water-absorbent characteristics (water retention capacity and the like) of the water-absorbent resin particles are easily controlled. The internal crosslinking agent is usually added to a reaction solution during the polymerization reaction.

A polymer on at least a surface layer portion of the polymer particle may be crosslinked by a reaction with a surface crosslinking agent. The surface crosslinking agent may be a compound containing two or more functional groups (reactive functional groups) having reactivity with a functional group derived from the ethylenically unsaturated monomer, for example.

The polymer particle may contain a certain amount of water, and may further contain various additional components therein, in addition to a polymer composed of the ethylenically unsaturated monomers. Examples of the additional components include a gel stabilizing agent and a metal chelating agent.

The shape of the water-absorbent resin particles are not particularly limited, and for example, the shape may be substantially spherical, crushed, or granular, or may be a shape that is formed of primary particles with these shapes aggregated.

The particle size distribution of the water-absorbent resin particles may be adjusted by performing an operation such as particle size adjustment using classification with a sieve, as necessary. For example, a fraction that passed through a sieve having an opening of 850 $\mu$m but did not pass through a sieve having an opening of 250 $\mu$m may be used as water-absorbent resin particles.

<Coating Layer>

The coating layer is formed by bringing the water-absorbent resin particles into contact with a coating material.

The coating material is an emulsion containing polymer particles (emulsion particles), and usually contains water in addition to the polymer particles. The emulsion containing the polymer particles can be obtained by dispersion of a polymer in water, the polymer being able to form polymer particles in water. The emulsion may contain one or two or more kinds of polymer particles.

An average particle diameter of the polymer particles is 120 nm or less. The average particle diameter of the polymer particles may be 110 nm or less, 100 nm or less, 90 nm or less, 80 nm or less, 70 nm or less, 60 nm or less, 50 nm or less, 40 nm or less, 30 nm or less, 20 nm or less, 15 nm or less, 13 nm or less, or 11 nm or less, from the viewpoint of further reducing the initial water absorption amount while preventing a decrease in the water retention capacity. An average particle diameter of the polymer particles may be 1 nm or more, 2 nm or more, 3 nm or more, 4 nm or more, 5 nm or more, 6 nm or more, 7 nm or more, 8 nm or more, or 9 nm or more. A preferred range of the average particle diameter of the polymer particles is 1 nm to 110 nm, 1 nm to 50 nm, 1 nm to 20 nm, 5 nm to 110 nm, 5 nm to 50 nm, or 5 nm to 20 nm.

The average particle diameter of the polymer particles can be appropriately adjusted within the above-mentioned range depending on preparation conditions of the emulsion. Specifically, the average particle diameter of the polymer particles can be adjusted within the above-mentioned range by controlling the temperature during the preparation of the emulsion (generally, the higher the temperature, the easier the particle size reduction), the stirring conditions during the preparation of the emulsion (generally, the stronger the stirring, the easier the particle size reduction), or control of the neutralization degree of a polar group such as a carboxyl group in a case of using a polymer having a polar group (generally, the higher the neutralization degree, the easier the particle size reduction).

The average particle diameter of the polymer particles is measured by the following procedure. Average particle diameters of two samples are measured by a dynamic light scattering method. In a case where a particle diameter error of the measured average particle diameters of the two samples obtained by the following expression (A) is less than 150%, an average of the measurement values of the average particle diameters of the two samples obtained by the dynamic light scattering method is employed. In a case where the particle diameter error of the measured average particle diameters of the two samples is more than 150%, a measurement result obtained by the dynamic light scattering method is determined as the inappropriate result, and a measurement result obtained by direct observation using a transmission electron microscope (TEM) is employed. A method for measuring the average particle diameter obtained by the dynamic light scattering method and a method for measuring the average particle diameter obtained by the direct observation using the transmission electron microscope (TEM) are as described in Examples below.

Particle diameter error (%) = {(Measured value of sample having large particle diameter)/(Measured value of sample having small particle diameter)} $\times$ 100

The coating material may contain a mixture of two or more kinds of polymer particles. In a case where the coating material contains two or more kinds of polymer particles having different average particle diameters, the average particle diameter of the polymer particle diameters is an average value of average particle diameters determined by taking into consideration the ratio (mass ratio) of each kind of the polymer particles in the coating material. For example, in a case where polymer particles A having an average particle diameter of 25.5 nm and polymer particles B having an average particle diameter of 329 nm are contained at a mass ratio of 8:2 (A:B), the average particle diameter of the polymer particles is 86.2 nm (25.5 nm $\times$ 8/10 + 329 nm $\times$ 2/10).

The polymer particles are particles consisting of a polymer (homopolymer or copolymer). The polymer particles may contain a polymer having a carboxyl group. The polymer having a carboxyl group includes a monomer unit derived from a monomer having a carboxyl group. Examples of the monomer having a carboxyl group include (meth)acrylic acid and salts thereof, and the like. Examples of salts of the (meth)acrylic acid include sodium acrylate, potassium acrylate, and the like.

In the polymer having a carboxyl group, the carboxyl group may be neutralized with an alkaline neutralizing agent. The neutralization degree in the polymer having a carboxyl group by an alkaline neutralizing agent may be, for example, 10% by mol or more of the carboxyl group in the polymer having a carboxyl group, 20% by mol or more, 30% by mol or more, 40% by mol or more, 50% by mol or more, 60% by mol or more, 70% by mol or more, 80% by mol or more, 90% by mol or more, or 95% by mol or more and may be 100% by mol or less, or 98% by mol or less.

A polymer contained in a polymer particle may contain a monomer unit derived from a monomer (other monomer) other than the monomer having a carboxyl group. The other monomers may be, for example, substituted or unsubstituted alkene.

Examples of the unsubstituted alkene include ethylene, propylene, and butene. The unsubstituted alkene is preferably ethylene and/or propylene, and preferably ethylene.

Examples of the substituted alkene include vinyl esters and the like. The vinyl ester may be, for example, a vinyl versatate.

A polymer contained in a polymer particle may be a copolymer containing monomer units derived from a monomer having a carboxyl group and an alkene which is substituted or unsubstituted. The copolymer may be, for example, an ethylene-(meth)acrylate copolymer which is a copolymer containing monomer units derived from (meth)acrylate and ethylene, or a vinyl ester-(meth)acrylic acid copolymer which is a copolymer containing monomer units derived from (meth)acrylic acid and vinyl ester.

A content of the polymer particles in the coating material may be 2% by mass or more, 4% by mass or more, 6% by mass or more, or 8% by mass or more, and may be 20% by mass or less, 18% by mass or less, 16% by mass or less, 14% by mass or less, or 12% by mass or less, based on the total amount of the emulsion.

The emulsion used as the coating material may contain a material(other material) in addition to the above-mentioned polymer particles and water. The other material may be, for example, a non-emulsion coating material. Examples of the non-emulsion coating material include a water-soluble resin. Examples of the water-soluble resin include polyethylene glycol and polyvinyl alcohol.

The emulsion containing the polymer particles can be prepared by applying a commonly used emulsion preparation method. For example, the emulsion containing the polymer particles containing a polymer having a carboxyl group can be produced by a method including a step A of mixing the polymer having a carboxyl group with an alkaline neutralizing agent to obtain a reaction solution, a step B of heating the reaction solution while stirring the reaction solution and then holding the reaction solution in a heated state, a step C of cooling the reaction solution, and a step D of filtering the reaction solution using a mesh. Specific reaction conditions, heating temperatures, cooling temperatures, and the like may be as described in Examples.

The use amount of the coating material may be 2% by mass or more, 4% by mass or more, 6% by mass or more, or 8% by mass or more, and may be 20% by mass or less, 18% by mass or less, 16% by mass or less, 14% by mass or less, or 12% by mass or less, based on the total amount of the water-absorbent resin particles.

It is possible to form the coating layer by, for example, (1) a method using an eggplant-shaped flask, (2) a method using a sprayer, or (3) a method using various granulators.

(1) Method Using Eggplant-shaped Flask

In a method using an eggplant-shaped flask, first, the coating material is injected into the eggplant-shaped flask, and the water-absorbent resin particles are subsequently injected thereto. The eggplant-shaped flask is attached to an evaporator, and heated while rotating to distill off a liquid medium contained in the coating material under reduced pressure conditions. Thus, coated resin particles containing water-absorbent resin particles whose surfaces are covered with the coating material are obtained.

(2) Method Using Sprayer

In a method using a sprayer, first, the water-absorbent resin particles are added to a separable flask equipped with a stirrer blade, and stirred. The coating material is sprayed on the water-absorbent resin particles whirled up by stirring with the stirrer blade. Spraying of the coating material can be performed using a two-fluid nozzle, for example. It is desirable that the coating material is atomized by a stream of an inert gas such as nitrogen and sprayed, because then uniform coverage can be expected. Thereafter, the contents of the separable flask are taken out, heated by a hot air dryer, and thereafter cooled to room temperature to obtain coated resin particles.

(3) Method Using Various Granulators

Examples of the granulators used for producing the coated resin particles include a rolling granulator, a stirring granulator, and a fluidized bed granulator.

When the tumbling granulator is used, an inclined shallow circular container equipped in the tumbling granulator is rotated, the water-absorbent resin particles are supplied to the circular container, and an appropriate amount of the coating material is also added. Then, while some of the water-absorbent resin particles aggregate, the coating layer is formed on a surface thereof by the solvent or dispersion medium contained in the coating material during tumbling. A step of adding the water-absorbent resin particles and the coating material may be performed a plurality of times as necessary.

When the stirring granulator is used, the water-absorbent resin particles are injected into a mixer equipped in the stirring granulator, and the coating material is added while performing the mixing by stirring. Then, while some of the water-absorbent resin particles aggregate, the coating layer is formed on a surface thereof by the liquid medium contained in the coating material during stirring. A step of adding the water-absorbent resin particles and the coating material may be performed a plurality of times as necessary. Excessive aggregation of the water-absorbent resin particles may be suppressed by controlling the shearing force of the mixer.

When the fluidized bed granulator is used, first, the water-absorbent resin particles are injected into a container that is equipped in the fluidized bed granulator and can blow hot air from the lower part to previously fluidize the water-absorbent resin particles. Thereafter, when the coating material is scattered from a nozzle equipped in the container, while some of the water-absorbent resin particles aggregate, the coating layer is formed on a surface thereof by the liquid medium contained in the coating material during stirring. The coating material may be scattered a plurality of times as necessary. Excessive aggregation of the water-absorbent resin particles may be suppressed by adjusting the scattering amount and the scattering frequency of the coating material. As the fluidized bed granulator, for example, a fluidized bed granulator FBD/SG (manufactured by YENCHEN MACHINERY CO., LTD.) can be used.

A ratio ($X_1/X_0 \times 100$) of a lock-up height $X_1$ of the coated resin particles at a two-minute value to a lock-up height $X_0$ of the water-absorbent resin particle at a two-minute value may be 80% or less, 70% or less, 60% or less, 50% or less, 40% or less, 30% or less, 20% or less, 10% or less, or 6% or less, and may be 0% or more, 1% or more, or 3% or more.

The lock-up height $X_1$ of the coated resin particles at the two-minute value may be 2.0 cm or less, 1.8 cm or less, 1.6 cm or less, 1.4 cm or less, 1.2 cm or less, 1.0 cm or less, 0.8 cm or less, 0.6 cm or less, 0.5 cm or less, 0.4 cm or less, or 0.3 cm or less, and may be 0 cm or more, or 0.1 cm or more.

The lock-up height $X_0$ of the water-absorbent resin particles at the two-minute value may be 10.0 cm or less, 8.0 cm or less, 6.0 cm or less, 5.0 cm or less, or 4.5 cm or less, and may be 2.5 cm or more, 3.0 cm or more, or 3.5 cm or more.

A lock-up height at a two-minute value is measured by the following procedure.

(1) 0.200 g of particles for evaluation is disposed over an entire bottom surface of a cylinder having an inner diameter of 2.0 cm and a depth of 8.0 cm to form a particle layer, and a height of the particle layer is denoted by H0 [cm]. The particles for evaluation are the water-absorbent resin particles or coated resin particles.
(2) 20 g of physiological saline is injected to a particle layer to swell the particle layer.
(3) The height of the particle layer after two minutes have elapsed from the time point at which the total amount of physiological saline was injected was recorded as H2, and a lock-up height at a two-minute value [cm] was calculated from the expression represented by H2 - H0. Other details of the test conditions will be described in Examples described later.

A ratio ($Y_1/Y_0 \times 100$) of a water retention capacity $Y_1$ of the coated resin particles in the physiological saline to a water retention capacity $Y_0$ of the water-absorbent resin particles in the physiological saline may be 60% or more, 70% or more, 75% or more, 80% or more, 85% or more, 90% or more, 95% or more, or 97% or more, and may be 100% or less.

The water retention capacity $Y_1$ of the coated resin particles in the physiological saline may be 25 g/g or more, 28 g/g or more, 30 g/g or more, 33 g/g or more, 35 g/g or more, 38 g/g or more, or 40 g/g or more, and may be 60 g/g or less, 55 g/g or less, 50 g/g or less, 45 g/g or less, 40 g/g or less, or 38 g/g or less.

The water retention capacity $Y_0$ of the water-absorbent resin particles in the physiological saline may be 25 g/g or more, 28 g/g or more, 30 g/g or more, 33 g/g or more, 35 g/g or more, 38 g/g or more, or 40 g/g or more, and may be 65 g/g or less, 60 g/g or less, 55 g/g or less, 50 g/g or less, or 45 g/g or less.

The water retention capacity in the physiological saline is measured by a method described in Examples described later.

[Coated Resin Particles]

The coated resin particles according to the present embodiment include the water-absorbent resin particles and a coating layer that covers at least a part of a surface of the water-absorbent resin particles, in which at least a part of the coating layer is an aggregate composed of polymer particles having an average particle diameter of 120 nm or less. Details of the polymer particles having an average particle diameter of 120 nm or less are as mentioned above.

Each of the content of the coating layer and the content of the aggregate composed of the polymer particles may be, for example, 1 to 40 parts by mass with respect to 100 parts by mass of the water-absorbent resin particles. The content of the coating layer may be, for example, 1 part by mass or more, 2 parts by mass or more, 4 parts by mass or more, 6 parts by mass or more, or 8 parts by mass or more and may be 40 parts by mass or less, 35 parts by mass or less, 30 parts by mass or less, 25 parts by mass or less, 20 parts by mass or less, 15 parts by mass or less, or 12 parts by mass or less, with respect to 100 parts by mass of the water-absorbent resin particles. The content of the aggregate composed of the polymer particles may be, for example, 1 part by mass or more, 2 parts by mass or more, 4 parts by mass or more, 6 parts by mass or more, or 8 parts by mass or more and may be 40 parts by mass or less, 35 parts by mass or less, 30 parts by mass or less, 25 parts by mass or less, 20 parts by mass or less, 15 parts by mass or less, or 12 parts by mass or less, with respect to 100 parts by mass of the water-absorbent resin particles.

The aggregate composed of the polymer particles having an average particle diameter of 120 nm or less can be formed by the above-mentioned method for forming a coating layer.

The coated resin particles according to the present embodiment can be used alone, and also can be used as mixed particles by mixing with resin particles having a water absorption property other than the coated resin particles (hereinafter, simply referred to as "other resin particles"). The coated resin particles may be used in a mixture of a plurality of kinds of coated resin particles having different coating layer thicknesses and/or coating layer materials.

[Water-absorbent Resin Composition]

The water-absorbent resin composition according to one embodiment contains the above-mentioned coated resin particles, and a resin particle (other resin particle) having a water absorption property other than the coated resin particles.

In the water-absorbent resin composition, the content of the coated resin particles may be, for example, 5 parts by mass or more or 15 parts by mass or more with respect to 100 parts by mass in the total content of the coated resin particles and the other resin particles, and may be 95 parts by mass or less, 85 parts by mass or less, 60 parts by mass or less, 40 parts by mass or less, 30 parts by mass or less, or 25 parts by mass or less.

The water-absorbent resin particles constituting the coated resin particles (subjected to covering with the coating layer) may be the same particle as the other resin particle, or may be a different particle.

[Absorbent Article]

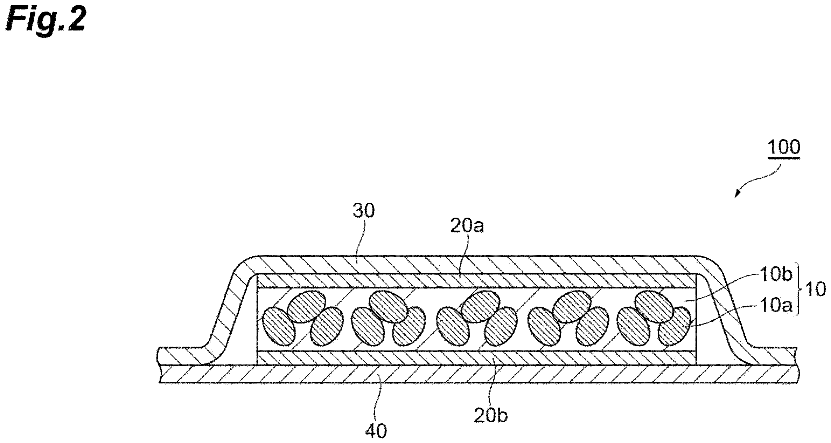

The coated resin particles are used to form an absorbent material constituting an absorbent article such as diapers, for example. Fig. 2 is a cross-sectional view showing an example of an absorbent article. An absorbent article 100 shown in Fig. 2 includes a sheet shaped absorbent material 10, core wraps 20a and 20b, a liquid permeable sheet 30, and a liquid impermeable sheet 40. In the absorbent article 100, the liquid impermeable sheet 40, the core wrap 20b, the absorbent material 10, the core wrap 20a, and the liquid permeable sheet 30 are laminated in this order. In Fig. 2, there is a portion shown so that a gap is present between members, but the members may be in close contact with each other without the gap.

The absorbent material 10 has coated resin particles 10a according to the above-mentioned embodiment and a fiber layer 10b containing a fibrous material. The coated resin particles 10a are dispersed in the fiber layer 10b.

The core wrap 20a is disposed on one surface side of the absorbent material 10 (upper side of the absorbent material 10 in Fig. 1) in a state of being in contact with the absorbent material 10. The core wrap 20b is disposed on the other surface side of the absorbent material 10 (on a lower side of the absorbent material 10 in Fig. 1) in a state of being in contact with the absorbent material 10. The absorbent material 10 is disposed between the core wrap 20a and the core wrap 20b. Examples of the core wraps 20a and 20b include tissues, non-woven fabrics, and the like. The core wrap 20a and the core wrap 20b each have, for example, a main surface having the same size as that of the absorbent material 10.

The liquid permeable sheet 30 is disposed on the outermost part at the side where the liquid to be absorbed enters. The liquid permeable sheet 30 is disposed on the core wrap 20a in a state of being in contact with the core wrap 20a. Examples of the liquid permeable sheet 30 include a non-woven fabric made of a synthetic resin such as polyethylene, polypropylene, polyester, and polyamide, and a porous sheet. The liquid impermeable sheet 40 is disposed on the outermost part at the opposite side to the liquid permeable sheet 30 in the absorbent article 100. The liquid impermeable sheet 40 is disposed on the lower side of the core wrap 20b in a state of being in contact with the core wrap 20b. Examples of the liquid impermeable sheet 40 include a sheet made of a synthetic resin such as polyethylene, polypropylene, and polyvinyl chloride, and a sheet made of a composite material of these synthetic resins and a non-woven fabric. The liquid permeable sheet 30 and the liquid impermeable sheet 40 each have, for example, a main surface wider than the main surface of the absorbent material 10, and outer edges of the liquid permeable sheet 30 and the liquid impermeable sheet 40 each extend around the absorbent material 10 and the core wraps 20a and 20b.

The magnitude relationship between the absorbent material 10, the core wraps 20a and 20b, the liquid permeable sheet 30, and the liquid impermeable sheet 40 is not particularly limited, and is appropriately adjusted according to the use of the absorbent article or the like. The method of retaining the shape of the absorbent material 10 using the core wraps 20a and 20b is not particularly limited, and as shown in Fig. 2, the absorbent material may be wrapped by a plurality of core wraps, and the absorbent material is wrapped by one core wrap.

The absorbent material 10 may further include resin particles (the other resin particles) having a water absorption property other than the coated resin particles 10a. In a case where the other resin particles are included, the content of the coated resin particles 10a may be 5 parts by mass or more or 15 parts by mass or more, and may be 95 parts by mass or less or 85 parts by mass or less with respect to 100 parts by mass in the total content of the coated resin particles and the other resin particles, for example.

**Examples**

Hereinafter, the present invention will be more specifically described with reference to examples. However, the present invention is not limited to these examples.

<Comparative Example 1: Production of Water-absorbent Resin Particles (1)>

A round-bottomed cylindrical separable flask with an inner diameter of 11 cm and a volume of 2 L equipped with a reflux cooling device, a dropping funnel, a nitrogen gas introduction tube, and a stirrer (a stirrer blade having two stages of four inclined paddle blades with a blade diameter of 5 cm) was prepared. 293 g of n-heptane (hydrocarbon dispersion medium) and 0.736 g of a maleic acid anhydride-modified ethylene/propylene copolymer (polymeric dispersant, manufactured by Mitsui Chemicals, Inc., Hi-Wax 1105A) were added into this separable flask to obtain a mixture. The dispersant was dissolved by heating to 80°C while stirring this mixture at a rotation speed of 300 rpm. Thereafter, the mixture was cooled to 55°C.

Subsequently, 92.0 g of an 80.5% by mass acrylic acid aqueous solution (acrylic acid: 1.03 mol) was put into a triangular flask having a volume of 500 mL. Subsequently, while cooling from the outside, 102.2 g of a 30% by mass sodium hydroxide aqueous solution was added dropwise to neutralize 75% by mol of acrylic acid. Thereafter, 0.092 g of hydroxyethyl cellulose (thickener, manufactured by SUMITOMO SEIKA CHEMICALS CO., LTD., HEC AW-15F), 0.0736 g (0.272 mmol) of potassium persulfate (water-soluble radical polymerization initiator), 0.0101 g (0.0580 mmol) of ethylene glycol diglycidyl ether (internal crosslinking agent), and 34.66 g of ion-exchanged water were added, and then dissolved to prepare a first stage monomer aqueous solution.

The above-mentioned first stage monomer aqueous solution was added to the above-mentioned separable flask, and stirring was then carried out for 10 minutes. On the other hand, 0.736 g of sucrose stearate (surfactant, Mitsubishi-Chemical Foods Corporation, RYOTO Sugar Ester S-370, HLB: 3) was heat-dissolved in 6.62 g of n-heptane by heating to obtain a surfactant solution. 7.356 g of the obtained surfactant solution was added to the separable flask to obtain a reaction solution. Then, the inside of the separable flask system was sufficiently replaced with nitrogen while stirring the reaction solution at the rotation speed of 550 rpm. Thereafter, the separable flask was immersed in a water bath at 70°C to raise the temperature of the reaction solution, and a first stage polymerization was performed for 10 minutes to obtain a first stage reaction mixture.

Subsequently, 128.8 g of an 80.5% by mass acrylic acid aqueous solution (acrylic acid: 1.44 mol) was put into another triangular flask having a volume of 500 mL. Subsequently, while cooling from the outside, 143.1 g of a 30% by mass sodium hydroxide aqueous solution was added dropwise to neutralize 75% by mol of acrylic acid. Thereafter, 0.1030 g (0.3810 mmol) of potassium persulfate, 0.0116 g (0.0666 mmol) of ethylene glycol diglycidyl ether (internal crosslinking agent), and 3.13 g of ion-exchanged water were added and then dissolved to prepare a second stage monomer aqueous solution.

The first stage reaction mixture was cooled to 25°C while stirring the first stage reaction mixture at a rotation speed of 1000 rpm, and the total amount of the second stage monomer aqueous solution was then added to the first stage reaction mixture to obtain a reaction solution. The inside of the system was sufficiently replaced with nitrogen while stirring the reaction solution. Thereafter, the separable flask was immersed in a water bath at 70°C to raise the temperature of the reaction solution, and the second stage polymerization was performed for 5 minutes to obtain a second stage reaction mixture (polymer particles before surface crosslinking).

After the second stage polymerization, the temperature of the second stage reaction mixture was raised in an oil bath at 125°C, and 252 g of water was extracted to the outside of the system while refluxing n-heptane by azeotropic distillation of n-heptane and water. Subsequently, 0.0884 g (0.5075 mmol) of ethylene glycol diglycidyl ether was added as a surface crosslinking agent, and the mixture was then maintained at 83°C for 2 hours to obtain a dispersion liquid of the polymer particles after surface crosslinking.

Thereafter, the temperature of the dispersion liquid of the polymer particles after the above-mentioned surface crosslinking was raised in an oil bath at 125°C, and n-heptane was evaporated and dried to obtain a dried product. This dried product was passed through a sieve having an opening of 850 μm to obtain 233.4 g of water-absorbent resin particles (1) in a state in which spherical particles aggregated and were not covered.

<Comparative Example 2: Production of Coated Resin Particles (1)>

A round-bottomed cylindrical separable flask with an inner diameter of 110 mm and an internal volume of 2 L equipped with a reflux cooling device, a dropping funnel, a nitrogen gas introduction tube, and a stirrer (a stirrer blade having two stages of four inclined paddle blades with a blade diameter of 50 mm) was prepared. 40 g of the water-absorbent resin particles (1) and 480 g of n-heptane were mixed in this separable flask.

A polyol aqueous solution obtained by mixing 2.0 g of a polyether polyol (manufactured by AGC Inc., EXCENOL 750ED) with 38.0 g of ion-exchanged water was added to a separable flask, and the mixture was then stirred at room temperature for 30 minutes. Thereafter, an isocyanate solution obtained by mixing 2.38 g of tolylene-2,4-diisocyanate with 21.42 g of acetone was added, and stirring was then carried out for 60 minutes at room temperature to cause a sequential polymerization reaction on surfaces of the polymer particles, thereby obtaining a reaction product. Subsequently, the temperature of the reaction product was increased to be evaporated in an oil bath at 125°C to remove n-heptane. Then, the reaction product passed through a sieve having an opening of 850 µm to obtain 37.3 g of coated resin particles (1) each of which is provided with a water-absorbent resin particle and a coating layer (polyurethane).

<Example 1: Production of Coated Resin Particles (2)>

[Preparation of Emulsion Material (1) (Preparation Example 1)]

Water and ice were added to a plastic vat having a length of 27 cm, a width of 38 cm, and a depth of 7 cm to prepare an ice bath at 3°C. A glass beaker having an internal volume of 1 L was placed in this ice bath, and 897.41 g of ion-exchanged water was added. The ice bath was installed on a magnetic stirrer, a stirrer tip was added into the beaker, and stirring was carried out.

10.55 g of sodium hydroxide (granules) (NACALAI TESQUE, INC.) was added in small portions into the beaker to produce a sodium hydroxide aqueous solution.

A round-bottomed cylindrical separable flask with an inner diameter of 11 cm and an internal volume of 2 L equipped with a reflux cooling device, a thermometer, and a stirrer (a stirrer blade having four inclined paddle blades having a blade diameter of 5 cm) was prepared. 100 g of an ethylene-acrylic acid copolymer (SK global chemical: Primacor 5980i) was added to this flask. Thereafter, the total amount of the above-mentioned sodium hydroxide aqueous solution was added. Thereafter, the beaker used for preparing the sodium hydroxide aqueous solution was washed with 50.0 g of ion-exchanged water, and the washed water was added to the separable flask to obtain a reaction solution.

While stirring the reaction solution at a rotation speed of 500 rpm of the stirrer, the reaction solution was immersed in an oil bath at 103°C, and the internal temperature was raised to 95°C. Thereafter, the reaction solution was maintained for 4 hours while appropriately adjusting the temperature of the oil bath so that the internal temperature was 95°C to 97°C.

Thereafter, the separable flask was taken out from the oil bath, and left to cool at room temperature until the internal temperature reached 35°C. After the confirmation of the internal temperature being 35°C or lower, the reaction solution was filtered through a nylon mesh having an opening of 108 µm and a 10% water-dispersible emulsion material (1) of an ethylene-sodium acrylate copolymer having a neutralization degree of 95% by mol was obtained as a filtrate.

[Coating Step]

The water-absorbent resin particles (1) produced in Comparative Example 1 were classified with a sieve having an opening of 250 µm, and 500 g or more of water-absorbent resin particles having a particle diameter of 250 to 850 µm were obtained.

500.0 g of the water-absorbent resin particles (1) was injected into a container of a fluid bed granulator, and hot air at 50°C was blown from the lower part of the container. Subsequently, 500 g of the 10% by mass water-dispersible emulsion material (1) of an ethylene-sodium acrylate copolymer having a neutralization degree of 95% by mol was sprayed to the water-absorbent resin particles being stirred up by the blown air while being dried. The coating material was sprayed, followed by drying at 50°C for 30 minutes. After the drying, coated resin particles were obtained.

50.0 g of the obtained coated resin particles was spread on a metal vat having a length of 26 cm and a width of 20 cm and the metal vat was covered with an aluminum foil. The aluminum foil was perforated, and the coated resin particles were heated for 60 minutes by a hot air dryer (ADVANTEC, FV-320) set at 100°C to obtain 50.0 g of coated resin particles (2).

<Example 2: Production of Coated Resin Particles (3)>

[Preparation of Emulsion Material (2) (Preparation Example 2)]

A 25% by mass water-dispersible emulsion material (2) of an ethylene-sodium acrylate copolymer having a neutralization degree of 85% by mol was obtained by performing neutralization in the same manner as in Example 1 except that, in the emulsion material preparation step, 261.31 g of ion-exchanged water and 9.44 g of sodium hydroxide (granules) were placed in a glass beaker having an internal volume of 500 mL and dissolved to prepare a sodium hydroxide aqueous solution.

[Coating Step]

200 g of the 25% by mass water-dispersible emulsion material (2) of the ethylene-sodium acrylate copolymer having a neutralization degree of 85% by mol, which was prepared above, was diluted with 300 g of ion-exchanged water in a polyethylene beaker having an internal volume of 1 L to prepare a coating solution having a concentration of the emulsion material of 10% by mass.

Subsequently, the coating step was carried out in the same manner as in Example 1, except that the coating solution prepared above was used, to obtain 50.0 g of coated resin particles (3).

<Example 3: Production of Coated Resin Particles (4)>

[Preparation of Emulsion Material (3) (Preparation Example 3)]

A 25% by mass water-dispersible emulsion material (3) of an ethylene-sodium acrylate copolymer having a neutralization degree of 75% by mol was obtained by performing neutralization in the same manner as in Example 1 except that, in the emulsion material preparation step, 259.98 g of ion-exchanged water and 8.33 g of sodium hydroxide (granules) were placed in a glass beaker having an internal volume of 500 mL and dissolved to prepare a sodium hydroxide aqueous solution.

[Coating Step]

Thereafter, 200 g of the 25% water-dispersible emulsion material (3) of the ethylene-sodium acrylate copolymer having a neutralization degree of 75% by mol, which was prepared above, was diluted with 300 g of ion-exchanged water in a polyethylene beaker having an internal volume of 1 L to prepare a coating solution having a concentration of the emulsion material of 10% by mass.

Next, the coating step was carried out in the same manner as in Example 1, except that the coating solution prepared above was used and the temperature of the hot air dryer in the subsequent heating step was set to 80°C, to obtain 50.0 g of coated resin particles (4).

<Example 4: Production of Coated Resin Particles (5)>

[Preparation of Emulsion Material (4) (Preparation Example 4)]

100 g of an ethylene-acrylic acid copolymer (SK global chemical: Primacor 5980i) was added to a pressure-resistant container having an inner diameter of 9.5 cm and a capacity of 1000 mL, which was equipped with a thermometer, a nitrogen gas introduction tube, and a stirrer (two-stage stirrer blades having an upper stage with four inclined paddle blades having a blade diameter of 5 cm and a lower stage with four non-inclined paddle blades having a blade diameter of 5 cm). Thereafter, a sodium hydroxide aqueous solution was prepared from 5.55 g of sodium hydroxide (granules) and 256.65 g of ion-exchanged water in the same manner as in Example 1, and the total amount thereof was added. Thereafter, the beaker used for preparing the sodium hydroxide aqueous solution was washed with 50.0 g of ion-exchanged water, and the washed water was added to the pressure-resistant container to obtain a reaction solution.

The pressure-resistant container was sealed with a bolt, and the substitution operation with nitrogen gas was carried out three times.

The reaction solution was stirred at 500 rpm and heated to 150°C using a mantle heater (TAIKA: GBR type). The reaction solution was heated and stirred for 4 hours from the time point at which the temperature reached 150°C.

The heat-resistant container was pulled up from the mantle heater and left to stand at room temperature until the internal temperature reached 35°C. After the confirmation of the internal temperature being 35°C or lower, the reaction solution was filtered through a nylon mesh having an opening of 108 $\mu$m to obtain a 25% water-dispersible emulsion material (4) of an ethylene-sodium acrylate copolymer having a neutralization degree of 50% by mol as a filtrate.

[Coating Step]

Thereafter, 200 g of the 25% water-dispersible emulsion material (4) of the ethylene-sodium acrylate copolymer having a neutralization degree of 50% by mol, which was prepared above, was diluted with 300 g of ion-exchanged water in a polyethylene beaker having an internal volume of 1 L to prepare a coating solution having a concentration of the emulsion material of 10% by mass.

Subsequently, the coating step was carried out in the same manner as in Example 1, except that the coating solution prepared above was used and the temperature of the hot air dryer in the subsequent heating step was set to 80°C, to obtain 50.0 g of coated resin particles (5).

<Example 5: Production of Coated Resin Particles (6)>

[Preparation of Emulsion Material (5) (Preparation Example 5)]

A 25% by mass water-dispersible emulsion material (5) of an ethylene-sodium acrylate copolymer having a neutralization degree of 50% by mol was obtained by performing neutralization in the same manner as in Example 1 except that, in the emulsion material preparation step, 256.65 g of ion-exchanged water and 5.55 g of sodium hydroxide (granules) were placed in a glass beaker having an internal volume of 500 mL and dissolved to prepare a sodium hydroxide aqueous solution.

[Coating Step]

Thereafter, 200 g of the 25% by mass water-dispersible emulsion material (5) of the ethylene-sodium acrylate copolymer having a neutralization degree of 50% by mol, which was prepared above, was diluted with 300 g of ion-exchanged water in a polyethylene beaker having an internal volume of 1 L to prepare a coating solution having a concentration of the emulsion material of 10% by mass.
Subsequently, the coating step was carried out in the same manner as in Example 1, except that the coating solution prepared above was used and the temperature of the hot air dryer in the subsequent heating step was set to 80°C, to obtain 50.0 g of coated resin particles (6).

<Example 6: Production of Coated Resin Particles (7)>

[Preparation of Emulsion Material (6) (Preparation Example 6)]

A 25% by mass water-dispersible emulsion material (6) of an ethylene-sodium acrylate copolymer having a neutralization degree of 35% by mol was obtained by performing neutralization in the same manner as in Example 1 except that, in the emulsion material preparation step, 254.66 g of ion-exchanged water and 3.89 g of sodium hydroxide (granules) were placed in a glass beaker having an internal volume of 500 mL and dissolved to prepare a sodium hydroxide aqueous solution.

[Coating Step]

Thereafter, 200 g of the 25% by mass water-dispersible emulsion material (6) of the ethylene-sodium acrylate copolymer having a neutralization degree of 35% by mol, which was prepared above, was diluted with 300 g of ion-exchanged water in a polyethylene beaker having an internal volume of 1 L to prepare a coating solution having a concentration of the emulsion material of 10% by mass.
Subsequently, the coating step was carried out in the same manner as in Example 1, except that the coating solution prepared above was used and the temperature of the hot air dryer in the subsequent heating step was set to 80°C, to obtain 50.0 g of coated resin particles (7).

<Example 7: Production of Coated Resin Particles (8)>

111 g of a vinyl versatate-acrylic copolymer (trade name: DXV.4140) (distributor: Kusumoto Chemicals, Ltd., manufacturer: VENORA) was diluted with 389 g of ion-exchanged water in a polyethylene beaker having an internal volume of 1 L to prepare a coating solution having a concentration of the emulsion material of 10% by mass.
Subsequently, the coating step was carried out in the same manner as in Example 1, except that the coating solution prepared above was used and the temperature of the hot air dryer in the subsequent heating step was set to 90°C, to obtain 50.0 g of coated resin particles (8).

<Comparative Example 3: Production of Coated Resin Particles (9)>

125 g of a water-based nylon emulsion (SUMITOMO SEIKA CHEMICALS CO., LTD.: SEPOLSION PA200) having a solid content of 40% by mass was diluted with 375 g of ion-exchanged water in a polyethylene beaker having an internal volume of 1 L to prepare a coating solution having a concentration of the emulsion material of 10% by mass.
Subsequently, the coating step was carried out in the same manner as in Example 1, except that the coating solution prepared above was used, and the subsequent heating step with the hot air dryer was not carried out, to obtain 50.0 g of coated resin particles (9).

<Example 8: Production of Coated Resin Particles (10)>

160 g of the 25% by mass water-dispersible emulsion material (3) of the ethylene-sodium acrylate copolymer having a neutralization degree of 75% by mol serving as a material A and 25 g of SEPOLSION PA200 having a solid content of 40% by mass serving as a material B were put into a polyethylene beaker having an internal volume of 1 L and diluted with 315 g of ion-exchanged water to prepare a coating solution having a concentration of the emulsion material of 10% by mass.

Subsequently, the coating step was carried out in the same manner as in Example 1, except that the coating solution prepared above was used and the temperature of the hot air dryer in the subsequent heating step was set to 80°C, to obtain 50.0 g of coated resin particles (10).

<Comparative Example 4: Production of Coated Resin Particles (11)>

20 g of the 25% by mass water-dispersible emulsion material (3) of the ethylene-sodium acrylate copolymer having a neutralization degree of 75% by mol serving as a material A and 112.5 g of SEPOLSION PA200 having a solid content of 40% by mass serving as a material B were put into a polyethylene beaker having an internal volume of 1 L and diluted with 367.5 g of ion-exchanged water to prepare a coating solution having a concentration of the emulsion material of 10% by mass.

Subsequently, the coating step was carried out in the same manner as in Example 1, except that the coating solution prepared above was used and the temperature of the hot air dryer in the subsequent heating step was set to 80°C, to obtain 50.0 g of coated resin particles (11).

<Example 9: Production of Coated Resin Particles (12)>

200 g of the 25% by mass water-dispersible emulsion material (3) of the ethylene-sodium acrylate copolymer having a neutralization degree of 75% by mol serving as the material A and an aqueous solution that is obtained by mixing 5 g of polyvinyl alcohol (Kuraray Co., Ltd.: Kuraray Poval 3-98) with 100 g of ion-exchanged water and dissolving the mixture in a water bath set at 80°C and serves as the material B were put into a polyethylene beaker having an internal volume of 1 L and diluted with 195 g of ion-exchanged water to prepare a coating solution containing the material A (emulsion material) whose concentration is 10% by mass and the material B (polyvinyl alcohol) whose concentration is 1% by mass.

Subsequently, the coating step was carried out in the same manner as in Example 1, except that the coating solution prepared above was used and the temperature of the hot air dryer in the subsequent heating step was set to 80°C, to obtain 50.0 g of coated resin particles (12).

<Evaluation of Initial Water Absorption Amount>

The initial water absorption amount was evaluated by a lock-up height at a two-minute value. The lock-up height at a two-minute value was measured by the following method. 0.200 g of particles for evaluation was precisely weighed and arranged in a layered shape on the bottom of an acrylic cylinder having an inner diameter of 2.0 cm and a depth of 8.0 cm to form a particle layer with a flat upper surface, and a height H0 of the particle layer was then measured. Thereafter, 20 g of physiological saline at 25°C was poured from the upper part of an acrylic cylinder at once. The measurement was started from the time point at which the total amount of the physiological saline was put therein, a height H2 of the particle layer after 2 minutes was read, and the lock-up height at a two-minute value was calculated from the following expression.

In a case where the upper surface of the particle layer after water absorption was not flat, a height of the highest portion was defined as H2.

$$\text{Lock-up height at two-minute value (cm)} = H2 - H0$$

<Evaluation of Water Retention Capacity of Physiological Saline>

After 500 g of physiological saline was added to a 500 mL polyethylene beaker, 2.00 g of the above-mentioned particles for evaluation were added in small portions while allowing rotation at a rotation speed of 600 rpm using a stirring bar. After the addition of the total amount of the particles for evaluation was finished, stirring was carried out for 30 minutes. Subsequently, the mixture was transferred into a cotton bag and the top of the cotton bag was closed using a rubber band. Subsequently, centrifugation (167G) was performed for 1 minute using a centrifuge. A mass $W_A$ was measured after dehydration. The same operation was performed without putting the particles for evaluation into the cotton bag, and a mass $W_B$ of the empty cotton bag was measured. Then, the water retention capacity (25°C) of the physiological saline was calculated by the following expression. The results are listed in Table 1.

Water retention capacity of physiological saline [g/g] = ($W_A$ - $W_B$)/mass of particles for evaluation (= 2.00)

<Measurement of Average Particle Diameter>

As the average particle diameter [nm], a measurement value was employed determined according to direct observation using TEM (Examples 1 to 3) or a dynamic light scattering method (the others).

[Measurement of Average Particle Diameter according to Direct Observation]

Nitto Analytical Techno-Center Co., Ltd. was entrusted with the measurement of the average particle diameter according to direct observation.
As a device, a transmission electron microscope HT7820 manufactured by Hitachi High-Tech Corporation was used. An emulsion material that was negatively stained (staining agent: EM Stainer) was observed at an acceleration voltage of 100 kV. From the obtained images, the particle diameter of 100 particles was measured, and the average value thereof was used as the particle diameter.

[Measurement of Average Particle Diameter by Dynamic Light Scattering Method]

As a measurement device, ZETASIZER Nano Series (manufactured by Spectris) was used. The diffusion of the particles moving by Brownian motion was measured by using the above-mentioned device, and the measurement result was applied to the Stokes-Einstein equation to calculate the particle diameter from the diffusion coefficient obtained by the cumulant method using the self-correlation function obtained according to the photon correlation method, and the calculated particle diameter was measured as an average particle diameter Z-Average (fluid dynamics diameter) X nm. Specifically, 50 ml of distilled water was put into a 100 ml beaker, 0.1 g of the coating solution to be measured was added thereto. The resultant mixture was dispersed with a spatula while stirring, and the particle diameter was measured with a dynamic light scattering particle size distribution analyzer.

<Results>

Table 1 and Table 2 show the measurement results of the particle diameter and the evaluation results. "EAA" in the tables indicates an ethylene-sodium acrylate copolymer. "VEOVA-PAA" in the tables indicates a versatic acid-polyacrylic acid copolymer. "PA" in the tables indicates polyamide. "PVA" in Table 2 indicates polyvinyl alcohol. In the tables, the neutralization degree is determined by using an alkaline neutralizing agent and indicates a ratio of the amount of neutralized acid groups by mole in a polymer to the total amount of acid groups by mole in the polymer used in the coating material (the amount of neutralized acid groups by mole/the total amount of acid groups by mole × 100). The addition amount in the tables is the mass (unit: parts by mass) of the polymer used in the coating material with respect to 100 parts by mass of the water-absorbent resin particles subjected to the coating.

EP 4 442 734 A1

[Table 1]

| | Coating material | | | | | | | Performance of coated resin particles | |
| | | | Average particle diameter [nm] | | | | | | |
| | | | Dynamic light scattering method | | Direct observation | Neutralization degree [% by mol] | Addition amount [parts by mass] | Lock-up height at two-minute value [cm] | Water retention capacity [g/g] |
| | Classification | Product name or preparation method | Actual measurement value | Average value | | | | | |
|---|---|---|---|---|---|---|---|---|---|
| Comparative Example 1 | Primary particle (without coating material) | | | | | | | 3.9 | 42.0 |
| Comparative Example 2 | Polyurethane | EXCENOL 750ED+TDI | - | - | - | - | | 0.8 | 22.0 |
| Example 1 | EAA | Preparation Examples 1 to 6 | 88 | - | 10 | 95 | 10 | 0.2 | 36.6 |
| | | | 516 | | | | | | |
| Example 2 | | | 20 | - | 15 | 85 | | 0.3 | 36.9 |
| | | | 36 | | | | | | |
| Example 3 | | | 25 | 25.5 | - | 75 | | 0.4 | 37.0 |
| | | | 26 | | | | | | |
| Example 4 | | | 20 | 21 | - | 50 | | 0.4 | 36.5 |
| | | | 22 | | | | | | |
| Example 5 | | | 30 | 32 | - | 50 | | 0.7 | 35.5 |
| | | | 34 | | | | | | |
| Example 6 | | | 98 | 99 | - | 35 | | 1.2 | 41.2 |
| | | | 100 | | | | | | |
| Example 7 | VEOVA-PAA | DXV.4140 | 80 | 80.5 | - | - | | 0.9 | 40.6 |
| | | | 81 | | | | | | |
| Comparative Example 3 | PA | SEPOLSION PA200 | 330 | 329 | - | - | | 4.1 | 40.3 |
| | | | 328 | | | | | | |

[Table 2]

| | Coating material | | | | | | | | | | | | Performance of coated resin particles | |
| | Material A | | | | Material B | | | | Addition amount [parts by mass] | | Average particle diameter [nm] | | | |
| | Classification | Preparation method | Average particle diameter [mm] Dynamic light scattering method | Neutralization degree [% by mol] | Classification | Product name | Average particle diameter [mi] Dynamic light scattering method | Neutralization degree | A | B | | Lock-up height at two-minute value [cm] | Water retention [g/g] |
| Example 8 | EAA | Preparation Example 3 | 25.5 | 75 | PA | SEPOLSION PA200 | 329 | - | 8 | 2 | 862 | 1.5 | 39.6 |
| Comparative Example 4 | EAA | | 25.5 | 75 | PA | SEPOLSION PA200 | 329 | - | 1 | 9 | 298.7 | 4.0 | 40.2 |
| Example 9 | EAA | | 25.5 | 75 | PVA(3-98) | | - | - | 10 | 1 | - | 0.5 | 36.9 |

EP 4 442 734 A1

16

As shown in Tables 1 and 2, it was confirmed that the coated resin particles of Examples had a small initial water absorption amount and a large water retention capacity.

**Reference Signs List**

1, 10a: Coated resin particle
1a: Water-absorbent resin particle
1b: Coating layer
10: Absorbent material
10b: Fiber layer
20a, 20b: Core wrap
30: Liquid permeable sheet
40: Liquid impermeable sheet
100: Absorbent article

**Claims**

1.  A method for producing coated resin particles, the method comprising:

    a step of bringing water-absorbent resin particles into contact with a coating material to form a coating layer on at least a part of a surface of the water-absorbent resin particles,
    wherein the coating material is an emulsion containing polymer particles, and
    an average particle diameter of the polymer particles is 120 nm or less.

2.  The method for producing the coated resin particles according to claim 1,
    wherein the polymer particles comprise a polymer having a carboxyl group.

3.  The method for producing the coated resin particles according to claim 1 or 2,

    wherein a ratio of a lock-up height of the coated resin particles at a two-minute value to a lock-up height of the water-absorbent resin particles at a two-minute value is 80% or less, and
    a ratio of a water retention capacity of the coated resin particles in a physiological saline to a water retention capacity of the water-absorbent resin particles in a physiological saline is 60% or more.

4.  Coated resin particles comprising:

    water-absorbent resin particles; and
    a coating layer that covers at least a part of a surface of the water-absorbent resin particles,
    wherein at least a part of the coating layer is an aggregate composed of polymer particles having an average particle diameter of 120 nm or less.

# Fig.1

EP 4 442 734 A1

**Fig.2**

## INTERNATIONAL SEARCH REPORT

| International application No. |
| --- |
| **PCT/JP2022/037927** |

### A. CLASSIFICATION OF SUBJECT MATTER

*C08J 3/12*(2006.01)i; *C08L 101/08*(2006.01)i; *B01J 20/26*(2006.01)i
FI:    C08J3/12 Z CEY; C08L101/08; B01J20/26 D

According to International Patent Classification (IPC) or to both national classification and IPC

### B. FIELDS SEARCHED

Minimum documentation searched (classification system followed by classification symbols)

C08J3/12; C08L101/08; B01J20/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2002/005949 A1 (SANYO CHEMICAL INDUSTRIES, LTD.) 24 January 2002 (2002-01-24)<br>claims, page 21, line 4 to page 23, line 2, page 24, lines 15, 16, examples | 1-4 |
| Y | | 1-4 |
| X | JP 2005-95759 A (SAN-DIA POLYMER LTD.) 14 April 2005 (2005-04-14)<br>claims, paragraphs [0069]-[0082], examples | 1-4 |
| Y | | 1-4 |
| Y | WO 2021/117782 A1 (SUMITOMO SEIKA CHEMICALS CO., LTD.) 17 June 2021 (2021-06-17)<br>claims, paragraphs [0019], [0044], [0045], [0066]-[0071], examples | 1-4 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **06 December 2022** | **20 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2022/037927** |

| Patent document cited in search report | Publication date (day/month/year) | Patent family member(s) | Publication date (day/month/year) |
|---|---|---|---|
| WO 2002/005949 A1 | 24 January 2002 | US 2004/0024104 A1 claims, paragraphs [0136]-[0145], [0155], examples | |
| JP 2005-95759 A | 14 April 2005 | (Family: none) | |
| WO 2021/117782 A1 | 17 June 2021 | (Family: none) | |

**EP 4 442 734 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014046020 A